# EUROPEAN PATENT APPLICATION

(11) **EP 4 813 954 A1**
(43) Date of publication of application: **30.09.2026**
(21) Application number: 24915665.4
(22) Date of filing: 11.10.2024
(51) Int. Cl.: C04B 35/103, F27D 1/00

(54) **SHAPED REFRACTORY, METHOD FOR PRODUCING SHAPED REFRACTORY, METHOD FOR CONSTRUCTING SHAPED REFRACTORY, AND LINING STRUCTURE FOR ELECTRIC FURNACE**

(30) Priority: 04.01.2024 JP 2024000083
(71) Applicant: JFE Steel Corporation, Tokyo 100-0011 (JP)
(72) Inventor: HINO, Yuta, Tokyo 100-0011 (JP)
(74) Representative: Grünecker Patent- und Rechtsanwälte PartG mbB
(86) International application number: PCT/JP2024/036417
(87) International publication number: WO 2025/146742

(57) **Abstract**

Provided is a shaped refractory used in an electric furnace for producing molten iron by melting an iron-containing raw material containing iron, the shaped refractory having excellent erosion resistance. The shaped refractory contains at least one selected from the group consisting of aluminum oxide, silicon carbide, and carbon, and the content of magnesium oxide is not more than 10 mass%. The apparent porosity of the shaped refractory is preferably not more than 10 vol%. The content of the aluminum oxide of the shaped refractory is preferably not less than 70 mass%. The shaped refractory is preferably electrocast brick. The iron-containing raw material is preferably reduced iron obtained by a direct reduction ironmaking method. The electric furnace is preferably a submerged arc furnace.

## Description

### TECHNICAL FIELD

The present invention relates to a shaped refractory, a method of producing a shaped refractory, a method of installing a shaped refractory, and a lining structure of an electric furnace.

### BACKGROUND ART

In a blast furnace method (a method of reducing iron ore using coke) which is a conventional ironmaking method, the amount of CO₂ emissions is high.

In recent years, efforts to reduce CO₂ emissions have been made around the world, and the direct reduction ironmaking method (also referred to as "direct reduction method" or "direct ironmaking method") has recently drawn attentions as an ironmaking method for reducing the amount of CO₂ emissions.

The direct reduction ironmaking method involves introducing a raw material (such as iron ore) containing iron oxide into a vertical furnace such as a shaft furnace, blowing a reducing gas thereinto, reducing the raw material to produce reduced iron, and thereafter melting the reduced iron in an electric furnace (Patent Literature 1).

### CITATION LIST

### PATENT LITERATURE

Patent Literature 1: WO 2023/171486

### SUMMARY OF INVENTION

### TECHNICAL PROBLEMS

In an electric furnace, electrical energy is imparted to an iron-containing raw material containing iron to generate heat, and the iron-containing raw material is melted by this heat.

One example of the iron-containing raw material is reduced iron produced by the direct reduction ironmaking method.

When reduced iron as above is melted in the electric furnace, slag is generated. This slag is different from conventional slag (for example, blast-furnace slag) in that, for example, it has low basicity and includes FeO, and is completely a liquid phase at an internal temperature (for example, 1,500°C to 1,600°C) of the electric furnace when the reduced iron is melted.

A shaped refractory used in the electric furnace is required to have excellent resistance to erosion caused by slag as above (erosion resistance).

The present invention has been made in view of the foregoing and has an object of providing a shaped refractory used in an electric furnace for producing molten iron by melting an iron-containing raw material containing iron, the shaped refractory having excellent erosion resistance.

### SOLUTION TO PROBLEMS

The present inventors found, through an earnest study, that employing the configuration described below enables the achievement of the above object. The invention has been thus completed.

Specifically, the present invention provides the following [1] to [11].
[1] A shaped refractory used in an electric furnace for producing molten iron by melting an iron-containing raw material containing iron, the shaped refractory comprising at least one selected from the group consisting of aluminum oxide, silicon carbide, and carbon, wherein a content of magnesium oxide is not more than 10 mass%.
[2] The shaped refractory according to [1], wherein an apparent porosity is not more than 10.0 vol%.
[3] The shaped refractory according to [1] or [2], wherein a content of the aluminum oxide is not less than 70 mass%.
[4] The shaped refractory according to any one of [1] to [3], wherein the shaped refractory contains the aluminum oxide and the carbon.
[5] The shaped refractory according to any one of [1] to [4], wherein the shaped refractory is an electrocast brick.
[6] The shaped refractory according to any one of [1] to [5], wherein the iron-containing raw material is reduced iron obtained by a direct reduction ironmaking method.
[7] The shaped refractory according to any one of [1] to [6], wherein the electric furnace is a submerged arc furnace.
[8] A method of producing a shaped refractory, comprising forming a kneaded product containing a refractory raw material into a green compact, and preforming at least drying on the green compact to thereby produce the shaped refractory according to any one of [1] to [7].
[9] A method of installing a shaped refractory, the method comprising installing the shaped refractory according to any one of [1] to [7] to an inner side of an iron shell of an electric furnace.
[10] A lining structure of an electric furnace, comprising the shaped refractory according to any one of [1] to [7] installed to an inner side of an iron shell of an electric furnace.
[11] The lining structure of an electric furnace according to [10], wherein the shaped refractory is installed at a position contacting slag in a side wall part of the electric furnace.

### ADVANTAGEOUS EFFECTS OF INVENTION

The present invention can provide a shaped refractory having excellent erosion resistance.

### BRIEF DESCRIPTION OF DRAWINGS

[FIG. 1] FIG. 1 is a schematic view showing an electric furnace.
[FIG. 2] FIG. 2 is a cross-sectional view showing part of a side wall part.

### DESCRIPTION OF EMBODIMENTS

### [Shaped refractory]

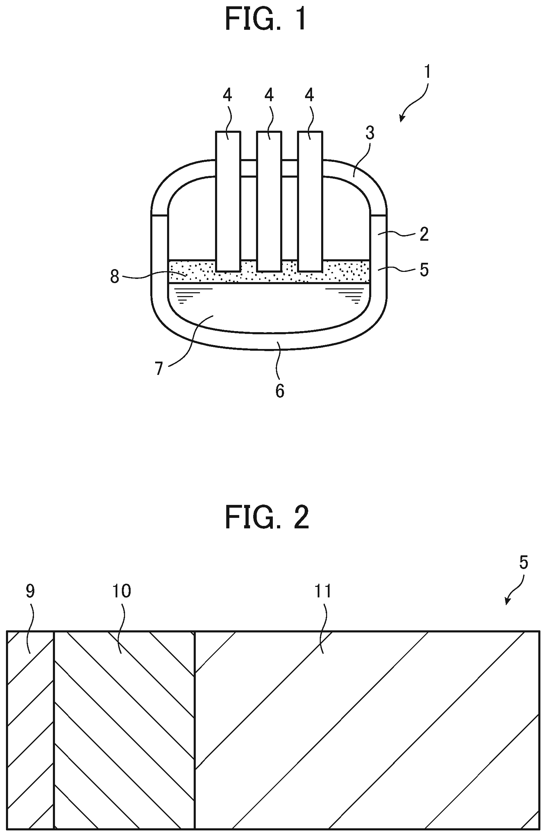

A shaped refractory of the present embodiment is a shaped refractory installed inside an iron shell in a lining structure (see FIG. 2) of an electric furnace (see FIG. 1) for producing molten iron by melting an iron-containing raw material containing iron.

The shaped refractory of the present embodiment contains at least one selected from the group consisting of aluminum oxide (Al₂O₃), silicon carbide (SiC), and carbon (C), and the content of magnesium oxide (MgO) is not more than 10 mass%.

With this configuration, the shaped refractory of the present embodiment has excellent erosion resistance. While the reason of this is not clear, it is assumed as follows.

That is, slag generated in the electric furnace for producing molten iron by melting an iron-containing raw material containing iron is slag having relatively high acidity (containing a large amount of SiO₂). When a shaped refractory that makes contact with such acidic slag contains a large amount of magnesium oxide for example, it reacts with SiO₂, generates a low-melting point compound, and thus is easily melted.

In contrast, it is considered that the shaped refractory of the present embodiment has a high resistance to erosion caused by acidic slag because it contains at least one of aluminum oxide which is amphoteric oxide, silicon carbide, and carbon.

The basicity of slag is represented by a mass ratio between CaO and SiO₂ (CaO/SiO₂). The basicity of the acidic slag is, for example, not more than 2.20 and is not more than 1.70 in some cases, taking gangue components derived from iron ore, an amount of lime added as flux and the other factors into account.

The shaped refractory of the present embodiment exhibits high resistance to erosion caused by the acidic slag having such basicity.

The basicity of the acidic slag may be not less than 0.50 and may also be not less than 0.75.

### <Chemical composition>

Next, a chemical composition (a content of each component) of the shaped refractory is described.

### <<Al₂O₃>>

When the shaped refractory contains aluminum oxide (Al₂O₃), the content thereof is, for example, not less than 50 mass%, and preferably not less than 60 mass%, more preferably not less than 70 mass%, even more preferably not less than 80 mass%, and particularly preferably not less than 90 mass% because the erosion resistance is more excellent.

The upper limit thereof is not particularly limited and may be 100 mass%, but the Al₂O₃ content in the shaped refractory is preferably not more than 98 mass% from the perspective of the cost and other factors.

### <<SiC>>

When the shaped refractory contains silicon carbide (SiC), the content thereof is, for example, not less than 1 mass%, and preferably not less than 5 mass% and more preferably not less than 8 mass%.

In particular, when the Al₂O₃ content is small (for example, less than 50 mass%), the SiC content is preferably not less than 15 mass%, more preferably not less than 25 mass%, and even more preferably not less than 35 mass%.

At the same time, the silicon carbide (SiC) content in the shaped refractory is preferably not more than 70 mass%, more preferably not more than 60 mass% and even more preferably not more than 50 mass%.

In particular, when the shaped refractory contains both aluminum oxide (Al₂O₃) and carbon (C), the SiC content is preferably not more than 20 mass%, more preferably not more than 12 mass%, even more preferably not more than 7 mass%, particularly preferably not more than 3 mass%, and most preferably 0 mass%.

### <<C>>

Carbon (C) is contained in the shaped refractory in the form of, for example, graphite.

When the shaped refractory contains carbon (C), the content thereof is, for example, not less than 3 mass%, preferably not less than 5 mass%, more preferably not less than 7 mass%, and even more preferably not less than 10 mass%.

In particular, when the Al₂O₃ content is small (for example, less than 50 mass%), the C content is preferably not less than 25 mass%, more preferably not less than 35 mass%, even more preferably not less than 45 mass%, and particularly preferably not less than 55 mass%.

Further, when the total content of Al₂O₃ and SiC is small (for example, less than 10 mass%), the C content is preferably not less than 90 mass%.

At the same time, the C content in the shaped refractory is, for example, not more than 99 mass%, preferably not more than 75 mass%, and more preferably not more than 65 mass%. The C content may be not more than 20 mass%.

### <<MgO>>

The magnesium oxide (MgO) content in the shaped refractory is not more than 10 mass% as described above, and preferably not more than 7 mass%, more preferably not more than 3 mass%, and even more preferably not more than 1 mass% because the erosion resistance is more excellent.

The lower limit thereof is not particularly limited and may be 0 mass%.

### <<Other components>>

The shaped refractory may contain components such as silicon dioxide (SiO₂), calcium oxide (CaO), and zirconium oxide (ZrO₂) (referred to as "other components" for convenience) in addition to the above-described components.

The content of the other components (for example, SiO₂) in the shaped refractory is, for example, not less than 1 mass% and more preferably not less than 3 mass%.

At the same time, the content of the other components is preferably not more than 20 mass%, more preferably not more than 16 mass%, and even more preferably not more than 13 mass%.

### <<Measurement method>>

The contents of the respective components described above are measured according to JIS R 2216 (methods for X-ray fluorescence spectrometric analysis of refractory products).

When the shaped refractory contains silicon carbide (SiC) and/or carbon (C) as the other components, the contents thereof are measured according to JIS R 2011 (methods for chemical analysis of refractories containing carbon and/or silicon-carbide).

### <Apparent porosity>

The apparent porosity of the shaped refractory is preferably not more than 10 vol%, more preferably not more than 8.0 vol%, even more preferably not more than 6.0 vol%, and particularly preferably not more than 4.0 vol% because the erosion resistance is more excellent.

Meanwhile, the shaped refractory may be an electrocast brick, and in this case, the apparent porosity of the shaped refractory is easily made small.

The apparent porosity of the shaped refractory is measured according to JIS R 2205 (measuring methods for apparent porosity, water absorption, and specific gravity of refractory bricks).

### <Method of producing shaped refractory>

Next, one example of the method of producing a shaped refractory (refractory brick) is described.

First, refractory raw materials are kneaded with a binder to obtain a kneaded material as necessary.

Applicable examples of the refractory raw materials include a mineral such as mullite (3Al₂O₃·2SiO₂) or corundum (Al₂O₃); oxide powder such as alumina (Al₂O₃) or silica (SiO₂); carbide powder such as silicon carbide (SiC); and carbon powder such as graphite (C).

The refractory raw materials are selected and blended such that the contents of the respective components in the finally obtained shaped refractory are the above-described contents.

The particle sizes of the refractory raw materials are appropriately selected.

The particle size of the mineral is adjusted (for example, to not more than 5 mm) by pulverization or other methods.

The particle size is determined by sieving.

While the shaped refractory may be produced without using a binder, the binder may be added thereto as necessary.

The binder is not particularly limited, a conventional binder used for production of a shaped refractory may be appropriately used, and examples thereof include: a phenol resin (main agent) and hexamine (curing agent); polyvinyl alcohol; lignin sulfonic acid or a salt thereof; silicate such as sodium silicate; phosphoric acid or a salt thereof; carbon bond; ceramic bond; and the like.

The addition amount of the binder is, for example, 0.1 to 6.0 mass% as external addition to the refractory raw materials. Specifically, when a phenol resin and hexamine are used for example, the addition amount of the phenol resin is preferably 1.0 to 5.0 mass% and more preferably 2.0 to 4.0 mass% as external addition to the refractory raw materials. The addition amount of the hexamine is preferably 0.1 to 1.0 mass% and more preferably 0.2 to 0.6 mass%.

Next, the obtained kneaded material is formed (e.g., press-formed) into a brick shape to obtain a green compact. In the press forming, a device such as a friction press, an oil press or a rubber press is used, and the material is pressed at an arbitrary pressure.

Thereafter, the green compact is subjected to drying to obtain a dried product.

As the drying conditions (such as temperature, time, and atmosphere), for example, the drying temperature is 180 to 260°C, and the drying time is 12 to 48 hours. The atmosphere for drying is a reduction atmosphere, for instance.

When the firing to be described later is not performed, the obtained dried product is used as the shaped refractory.

After the drying, the dried product may be fired to obtain a fired product.

As the firing conditions (such as temperature, time, and atmosphere), for example, the firing temperature is 1,200 to 1,600°C, and the firing time is 3 to 5 hours. The atmosphere for firing is a reduction atmosphere, for instance.

When the firing is performed, the obtained fired product is used as the shaped refractory.

Meanwhile, the shaped refractory may be an electrocast brick.

In this case, for example, the refractory raw materials are heated to 1,900 to 2,500°C using an arc melting furnace and completely melted, and an obtained molten product is put into a mold, gradually cooled, and thereby solidified to obtain the shaped refractory.

### [Electric furnace]

Next, an electric furnace 1 is described with reference to FIG. 1.

FIG. 1 is a schematic view showing the electric furnace 1.

The electric furnace 1 includes a furnace shell 2, a furnace lid 3 and electrodes 4.

The furnace shell 2 is a container-shaped member with its top side open and composed of a side wall part 5 and a furnace bottom part 6. The furnace bottom part 6 is provided with a bottom-blowing nozzle (not shown) for blowing a gas for stirring such as argon. An iron-containing raw material (not shown) is charged into the furnace shell 2. As the iron-containing raw material, for example, reduced iron produced by the direct reduction ironmaking method is used.

The furnace lid 3 is a member covering the opening of the furnace shell 2, and the electrodes 4 are attached to be movable in the vertical direction.

The electrodes 4 are, for example, graphite electrodes and generate, by electric power supplied from a power source (not shown), arc between the electrodes 4 and the iron-containing raw material charged into the electric furnace 1. Thus, the iron-containing raw material is melted by heating (arc heating). The electric furnace 1 is, for example, a submerged arc furnace, and in this case, heating is performed in the state where the electrodes 4 are embedded in the iron-containing raw material.

At this time, in order to promote melting of the iron-containing raw material, heating by a burner (not shown) may be conducted while the arc heating is performed. A reductant may be charged while the arc heating is performed.

The iron-containing raw material is melted in this manner, whereby molten iron 7 is produced, and further, slag 8 is generated on a liquid surface of the molten iron 7.

### [Lining structure of electric furnace]

Next, the lining structure of the electric furnace 1 is described with reference to FIG. 2. The following description also covers an installation method of the shaped refractory.

FIG. 2 is a cross-sectional view showing part of the side wall part 5 and more specifically, shows part of the side wall part 5 when viewed from an upper side of the electric furnace 1.

As shown in FIG. 2, the side wall part 5 of the electric furnace 1 has a five-layer structure.

That is, the lining structure of the electric furnace 1 is produced by installing an unshaped refractory 10 and an shaped refractory 11 in this order to the inner side (right side in FIG. 2) of the iron shell 9.

As the unshaped refractory 10, a stamp material or a castable refractory is suitably used. These are different from each other in composition and installation method. Specifically, a stamp material is made of a carbon material as a main component and is rammed with a rammer, whereas a castable refractory is made of alumina cement as a main component and is hardened through drying.

Then, the shaped refractory of the present embodiment described above is used as the shaped refractory 11.

Meanwhile, when the reduced iron produced by the direct reduction ironmaking method is used as the iron-containing raw material charged into the electric furnace 1, the generated slag 8 (see FIG. 1) has the characteristics such as inclusion of FeO as described above. In this case, in a conventional shaped refractory (such as a MgO-C brick containing a large amount of MgO), the resistance to the erosion caused by the slag 8 (erosion resistance) may be insufficient.

Thus, the shaped refractory of the present embodiment is used as the shaped refractory 11, and is preferably installed particularly at a position contacting the slag 8 in the side wall part 5 (so-called slag line). Therefore, the shaped refractory 11 suppresses the erosion caused by the slag 8.

The FeO content of the slag 8 may be changed depending on the amounts of gangue components and the degree of a reduction rate in the reduced iron charged into the electric furnace 1, and is, for example, not less than 0.10 mass% and is not less than 0.20 mass% in some cases.

The shaped refractory of the present embodiment used as the shaped refractory 11 exhibits high resistance to the erosion caused by the slag 8 having such a FeO content.

Meanwhile, the FeO content of the slag 8 may be not more than 10.00 mass% and may be not more than 5.00 mass%.

Conventionally, in the electric furnace 1 (particularly, a submerged arc furnace), a water cooling facility (not shown) is provided, for example, outside the iron shell 9 to perform cooling (water cooling) in some cases. In this case, while the erosion and the like of the shaped refractory 11 can be reduced, heat radiation (heat loss) occurs due to the cooling.

However, since the erosion is suppressed by using the shaped refractory of the present embodiment as the shaped refractory 11, the degree of the cooling can be lowered to reduce heat loss, or the water cooling facility itself can be omitted.

### EXAMPLES

The invention is specifically described below by way of examples. However, the invention is not limited to the examples described below.

### <Production of shaped refractory>

Shaped refractories having chemical compositions and apparent porosities shown in Table 1 below were produced.

First, as the refractory raw materials, mineral (such as mullite or corundum), oxide powder (such as silica or alumina), carbide powder and graphite were blended such that the shaped refractories have the chemical compositions shown in Table 1 below. The particle sizes of the refractory raw materials were suitably selected.

When the components of the chemical composition shown in Table 1 below do not add up to 100 mass% in total, this means that components which are not described in Table 1 below are included.

Next, the refractory raw materials and a binder were kneaded to obtain a kneaded product. As the binder, a phenol resin and hexamine were used, and the addition amount of the phenol resin was 3.0 mass% and the addition amount of the hexamine was 0.3 mass% as external addition to the refractory raw materials.

Next, the obtained kneaded product was press-formed in a brick form to obtain a green compact. In the press forming, a friction press was used to add a pressure of 2 t/cm² 6 times.

Thereafter, the green compact was subjected to drying to obtain a dried product. The drying temperature was 230°C, the drying time was 18 hours, and the atmosphere for drying was a reduction atmosphere (H₂: 30 vol%, N₂: 70 vol%).

After the drying, the dried product was subjected to firing. The firing temperature was 1,400°C, the firing time was 4 hours, and the atmosphere for firing was a reduction atmosphere (H₂: 30 vol%, N₂: 70 vol%).

As a result, a shaped refractory was obtained.

Only the shaped refractory of Inventive Example 5 was an electrocast brick.

That is, the refractory raw materials were not kneaded with the binder and were heated to 2,100°C using an arc melting furnace, and the obtained molten product was put into a mold and solidified to obtain the shaped refractory.

### <Evaluation of shaped refractory>

The obtained shaped refractory was installed to the whole of the furnace shell (including the side wall part) of the electric furnace (however, not a submerged arc furnace) described based on FIGS. 1 and 2. A water cooling facility was not installed. With this constitution, reduced iron produced by the direct reduction ironmaking method (hereinafter, simply referred to "reduced iron") was charged as an iron-containing raw material into the electric furnace and was melted to produce molten iron. The iron-containing raw material (reduced iron) was charged in an amount of 5 t at one time, and molten iron was produced plural times. Slag was generated on a liquid surface of the molten iron for each time.

According to analysis of the chemical composition of the produced slag, the composition was CaO: 25.6 mass%, SiO₂: 16.0 mass%; Al₂O₃: 25 mass%, MgO: 19.7 mass%, FeO: 0.54 mass%, the basicity, which is the mass ratio between CaO and SiO₂ (CaO/SiO₂), was 1.60, and as compared with the blast-furnace slag (containing almost no FeO) for example, the basicity was low, and the FeO content was high.

### <<Wear rate>>

A wear rate (unit: mm/ch) of the shaped refractory was determined from the number of charges (ch) performed before the shaped refractory installed at the slag line of the side wall part decreased by a given thickness (unit: mm).

As the wear rate value is smaller, the erosion resistance can be rated as more excellent. The results are shown in Table 1 below.

### <<Molten iron yield>>

The molten iron yield (unit: mass%) was determined from the mass of the iron-containing raw material (reduced iron) charged into the electric furnace and the mass of the produced molten iron. The results are shown in Table 1 below.

[Table 1]

**Table 1**

| | | | Inventive Example | | | | | Comparative Example |
|---|---|---|---|---|---|---|---|---|
| | | | 1 | 2 | 3 | 4 | 5 | 1 |
| Chemical composition | Al₂O₃ | mass% | 65 | 65 | 82 | - | 96 | - |
| | SiC | mass% | 10 | 10 | - | 40 | - | - |
| | C | mass% | 15 | 14 | 8 | 60 | - | 15 |
| | SiO₂ | mass% | 10 | 11 | 10 | - | 4 | - |
| | MgO | mass% | - | - | - | - | - | 80 |
| Apparent porosity | | vol% | 10.5 | 7.9 | 6.5 | 8.0 | 3.0 | 9.8 |
| Evaluation | Wear rate | mm/ch | 0.25 | 0.18 | 0.15 | 0.10 | 0.04 | 1.20 |
| | Molten iron yield | mass% | 98.0 | 98.5 | 99.0 | 98.0 | 98.5 | 97.0 |

### <Summary of evaluation results>

As evident from the results of Table 1 above, it was found that in all of Inventive Examples 1 to 5, the molten iron yield was high, and the value of the wear rate of the shaped refractory was smaller and the erosion resistance of the shaped refractory was more excellent than those of Comparative Example 1.

### <Reference Examples 1 to 5 and Reference Comparative Example 1>

Examples in which a submerged arc furnace was used as the electric furnace and the shaped refractories of Inventive Examples 1 to 5 and Comparative Example 1 were installed in the furnace shell of the submerged arc furnace were considered as Reference Examples 1 to 5 and Reference Comparative Example 1, respectively, and as in the above, molten iron was produced from the iron-containing raw material (reduced iron).

At this time, only in Reference Comparative Example 1 using the shaped refractory of Comparative Example 1, in order to ensure the erosion resistance, a water cooling facility was installed outside the iron shell, and cooling was performed when the molten iron was produced.

As a result, in Reference Comparative Example 1, while improvement of the erosion resistance was found, a lot of heat radiation (heat loss) was observed as compared to Reference Examples 1 to 6 in which the cooling was not performed, and further, a trouble due to the water cooling facility occurred once every two years.

### [REFERENCE SIGNS LIST]

- 1:: electric furnace
- 2:: furnace shell
- 3:: furnace lid
- 4:: electrode
- 5:: side wall part
- 6:: furnace bottom part
- 7:: molten iron
- 8:: slag
- 9:: iron shell
- 10:: unshaped refractory
- 11:: shaped refractory

## Claims

1. A shaped refractory used in an electric furnace for producing molten iron by melting an iron-containing raw material containing iron, the shaped refractory comprising
at least one selected from the group consisting of aluminum oxide, silicon carbide, and carbon,
wherein a content of magnesium oxide is not more than 10 mass%.

2. The shaped refractory according to claim 1, wherein an apparent porosity is not more than 10.0 vol%.

3. The shaped refractory according to claim 1 or 2, wherein a content of the aluminum oxide is not less than 70 mass%.

4. The shaped refractory according to any one of claims 1 to 3, wherein the shaped refractory contains the aluminum oxide and the carbon.

5. The shaped refractory according to any one of claims 1 to 4, wherein the shaped refractory is an electrocast brick.

6. The shaped refractory according to any one of claims 1 to 5, wherein the iron-containing raw material is reduced iron obtained by a direct reduction ironmaking method.

7. The shaped refractory according to any one of claims 1 to 6, wherein the electric furnace is a submerged arc furnace.

8. A method of producing a shaped refractory, comprising
forming a kneaded product containing a refractory raw material into a green compact, and
preforming at least drying on the green compact to thereby produce the shaped refractory according to any one of claims 1 to 7.

9. A method of installing a shaped refractory, the method comprising installing the shaped refractory according to any one of claims 1 to 7 to an inner side of an iron shell of an electric furnace.

10. A lining structure of an electric furnace, comprising the shaped refractory according to any one of claims 1 to 7 installed to an inner side of an iron shell of an electric furnace.

11. The lining structure of an electric furnace according to claim 10, wherein the shaped refractory is installed at a position contacting slag in a side wall part of the electric furnace.
